Europäisches Patentamt

European Patent Office

Office européen des brevets

(19)

(11) Veröffentlichungsnummer: **0 197 267**
**A1**

# (12) EUROPÄISCHE PATENTANMELDUNG

(21) Anmeldenummer: 86102114.5

(22) Anmeldetag: **19.02.86**

(51) Int. Cl.⁴: **C08G 69/34 , B41M 7/02**

(30) Priorität: 22.03.85 DE 3510415

(43) Veröffentlichungstag der Anmeldung:
**15.10.86 Patentblatt 86/42**

(84) Benannte Vertragsstaaten:
**DE FR GB IT**

(71) Anmelder: **SCHERING AKTIENGESELLSCHAFT**
**Berlin und Bergkamen**
**Waldstrasse 14 Postfach 15 40**
**D-4709 Bergkamen(DE)**

(72) Erfinder: **Drawert, Manfred, Dr. Dipl.-Chem.**
**Alte Kreisstrasse 13**
**D-5758 Fröndenberg(DE)**
Erfinder: **Krase, Horst**
**Unterster Kamp 14**
· **D-4700 Hamm(DE)**

(54) **Verwendung von Polyamidharzen für den Reliefdruck.**

(57) Die vorliegende Erfindung betrifft Polyamidharze für die Verwendung im Reliefdruck, welche hergestellt werden durch Kondensation von dimerer Fettsäure, einer Mischung aus Monocarbonsäuren und äquivalenten Mengen einer Diaminmischung aus Ethylendiamin und 1,6-Diaminohexan.

EP 0 197 267 A1

## Verwendung von Polyamidharzen für den Reliefdruck

Die Reliefdekoration von organischen und anorganischen Substraten ist seit längerem bekannt.

Die ursprüngliche Technik, reliefartige Drucke auf Papier oder Karton für z. B. Buchdecken, Werbeartikel, Postkarten, Visitenkarten, Packungen u. a. aufzubringen, bestand darin, die erhabene oder vertiefte Prägung mit gravierten Platten bzw. mit Drucktypen auf Druckmaschinen mit oder ohne Farbübertragung auszuführen. Dabei wird das Druckbild in einem oder mehreren Arbeitsgängen ein oder mehrfarbig vorgedruckt und dann hochgeprägt.

In neuerer Zeit setzt sich eine Abwandlung dieses Verfahrens immer mehr durch. Hierbei werden die Substrate zwar auch noch mit einem Druckbild versehen, jedoch entfällt die Prägephase. Die Erzeugung des Reliefs erfolgt durch Beschichtung des Drucks mit einem thermoplastischen Kunstharz.

Technisch läuft das Verfahren so, daß das Substrat im Offsetdruckverfahren mit den hierfür üblichen Druckfarben bedruckt wird. Sofort danach wird auf die noch feuchte und klebrige Oberfläche des Drucks ein fein pulverisiertes thermoplastisches Kunstharz gestreut. Der Überschuß wird von den nicht bedruckten und damit nicht klebenden Stellen wieder abgesaugt. Bei der sich daran anschließenden Wärmebehandlung wird das Harz bis auf Temperaturen oberhalb seines Schmelzpunktes erhitzt, so daß es zu einer geschlossenen Oberfläche verläuft.

An die thermoplastischen Kunstharze werden dabei eine Reihe von Forderungen gestellt, von denen die wichtigsten darin bestehen, daß das Harz keine oder eine möglichst geringe Eigenfärbung aufweist und sich zu einem feinen Pulver vermahlen läßt, welches auch unter Anwendungsbedingungen nicht blockt und somit rieselfähig bleibt.

Eine ausreichende Haftung an den verschiedenen Substraten, insbesondere Papier und Karton, eine gute Flexibilität, Verträglichkeit mit der Untergrundfarbe, klebfreie und glänzende Oberflächen werden ebenfalls vorausgesetzt.

Die bisher für diesen Zweck verwendeten Polyamidharze auf Basis von dimerisierten Fettsäuren und Ethylendiamin erfüllen eine Reihe dieser Forderungen, sind aber hinsichtlich der Farbzahl und Verfärbungsbeständigkeit noch verbesserungsbedürftig. Au ß erdem sind zu ihrer Herstellung hydrierte Fettsäuren mit Jodzahlen kleiner als 10 erforderlich und bei der Kondensation führen bereits kleine Mengen von Luftsauerstoff zu einer merklichen Verschlechterung der Farbzahl.

Aufgabe der vorliegenden Erfindung war es daher, diese Nachteile des Standes der Technik zu überwinden und Polyamide auf Basis dimerisierter Fettsäuren für die Verwendung in Reliefdrucken zu schaffen, welche sich neben einer guten Haftfestigkeit, Flexibilität, Wasser-, Öl-, Säure-und Alkalibeständigkeit, durch eine gute Farbzahl und verbesserte Resistenz gegenüber Verfärbung unter Kondensations und Anwendungsbedingungen auszeichnet.

Gegenstand der vorliegenden Erfindung sind daher thermoplastischer Polyamide für die Verwendung im Reliefdruck, welche dadurch gekennzeichnet sind, daß als Polyamide Kondensationsprodukte verwendet werden aus

A) hydrierter dimerisierter Fettsäure und gegebenenfalls

B) Propionsäure und

C) Essigsäure und

D) 2-Ethylhexansäure und oder iso-Nonansäure und

E) 1,2-Diaminoäthan und

F) 1,6-Diaminohexan,

worin das Verhältnis von A): B) + C) + D) im Bereich von 0,8 : 0,2 bis 0,6 : 0,4, vorzugsweise 0,7 : 0,3, liegen kann und der Anteil der Komponente B gleich oder größer als 0,1 der Komponente C) gleich oder größer als 0,05 und D) gleich oder größer als 0,025 und

das Verhältnis der Komponenten E) : F) im Bereich von 0,4 : 0,6 bis 0,6 : 0,4, vorzugsweise 0,5 : 0,5, liegt und

das Verhältnis der Komponenten A) bis D) zu den Komponenten E) und F) annähernd äquivalent ist.

Der Ausdruck dimerisierte Fettsäure bezieht sich auf die im Handel befindlichen polymerisierten Fettsäuren, welche nach bekannten Verfahren auf Jodzahlen gleich oder kleiner als ca. 25 hydriert wurden und deren Gehalt an dimerer Fettsäure gegebenenfalls durch die allgemein üblichen Verfahren auf annähernd 100 % erhöht wurde.

Die polymerisierten Fettsäuren lassen sich nach den üblichen Verfahren (vgl. z. B. US-PS 2 482 761, US-PS 3 256 304) herstellen aus ungesättigten natürlichen und synthetischen einbasischen aliphatischen Säuren mit 12 -22, bevorzugt 18 Kohlenstoffatomen.

Typische im Handel erhältliche polymere Fettsäuren haben etwa folgende Zusammensetzung:

monomere Säuren 5 -15 Gew.-%

dimere Säuren 60 -80 Gew,-%

tri-und höherpolymere Säuren 10 -35 Gew.-%.

Die erfindungsgemäßen Polyamidharze lassen sich schon bei normaler Temperatur zu einem Pulver vermahlen, welches auch unter Auftragungsbedingungen ohne weitere Zusätze nicht blockt und einwandfrei rieselfähig bleibt. Daher sind auch bei sehr kleinen bzw. detaillierten Druckbildern präzise und scharf begrenzte Zonen erzielbar. Die Korngröße des Pulvers kann je nach Bedarf variiert werden und liegt zwischen 50 - 250 Mikrometer, vorzugsweise zwischen 80 -150 Mikrometer.

Der Schmelzpunkt der Harze ist den Erfordernissen der Praxis angepaßt. Er liegt so niedrig, daß durch die Aufschemlztmeperaturen keine Beeinträchtigung von Substraten oder Untergrundlack entstehen, andererseits aber wiederum auch so hoch, daß auch bei Aufbringungstemperaturen keine Blockung eintritt.

Der bevorzugte Schmelzbereich (gemessen nach der Ring und Kugel-Methode) liegt zwischen ca. 90 -140 °C, vorzugsweise zwischen 100 - 120°C.

Außerdem weisen die Harze einen engen Schmelzbereich auf, so daß eine schnelle Kleb-und Blockfreiheit in der sich an die Aufschmelzphase anschließenden Abkühlungsstufe erreicht wird. Dies ist für die Erzielung schneller Taktzeiten von erheblichem Interesse.

Weiterhin sind die erfindungsgemäßen Polyamide gut verträglich mit den vorliegend üblichen Untergrundfarben, so daß bei den Schmelztemperaturen, welche ca. gleich oder größer als 20 °C oberhalb des Schmelzpunktes des Polyamids liegen sollten, ein guter Verlauf der Schmelze und somit nach Erstarrung eine einwandfreie Oberfläche gewährleistet ist.

Die Schmelzviskositäten, welche einheitlich bei 160°C mit einem Rotationsviskosimeter mit einer Platte/Kegel-Einrichtung der Fa. Haake nach den Angaben des Geräteherstellers gemessen wurden, liegen im Bereich von ca. 0,1 bis 0,8 Pa.s, vorzugsweise 0,3 bis 0,6 Pa.s.

Aufgrund guter Haftung insbesondere an Papieren und Kartonagen und der Flexibilität widersteht die Beschichtung allen üblichen Belastungen, wie z. B. Aufrollen oder Knicken, ohne daß es zu Abplatzungen oder Rißbildungen im Relief kommt.

Ihre Resistenz gegenüber Verfärbungen bei Anwesenheit von Luftsauerstoff sowohl in der Schmelze als auch unter Gebrauchsbedingungen - (Lichtechtheit), verbunden mit einer verschwindend geringen Eigenfärbung bei hoher Transparenz, sowie einer glatten glänzenden Oberfläche machen die erfindungsgemäßen Polyamide für die Verwendung als Reliefdrucke besonders geeignet. Farbtonverschiebungen des darunterliegenden Druckes sind daher nicht zu befürchten.

Zur Erzielung besonderer Effekte können die auf diesem Gebiet üblichen Zusätze wie Verlaufsmittel oder Wachse in geringen Mengen mitverwendet werden. Diese Mengen liegen -in Abhängigkeit vom Aufbau des Polyamids, des Verlaufsmittels und des Wachses -zwischen ca. 0,1 bis 5, vorzugsweise zwischen 0,1 bis 2 Gew.-%, bezogen auf das Polyamid.

Herstellung der Polymidharze

Beispiel 1

In einem mit Kühler, Rührer und Thermometer versehenen und mit $N_2$ gespültem Reaktor wurden 250 g (0,7 Äquivalente) hydrierter dimerer Fettsäure mit einer Jodzahl von 25 und einem Dimergehalt von 76,3 Gew.-% (Monomergehalt = 11,2 Gew.-%, Trimergehalt = 12,5 Gew.-%), 18,56 g (0,2 Äquivalente) Propionsäure, 3,76 g (0,05 Äquivalente) Essigsäure, 10,1 g (0,05 Äquivalente) iso-Nonansäure, 18,86 g (0,5 Äquivalente) Ethylendiamin, 60,25 g (0,5 Äquivalente) 1,6-Diaminohexan eingewogen und unter Stickstoff innerhalb von 90 min auf 230 °C aufgeheizt. Diese Temperatur wurde 2 h lang gehalten und anschließend 2 h bei 230 °C und 15 mbar nachkondensiert. Das Polyamid wies folgende Werte auf:

Erweichungspunkt (Ep):      101 °C
(Ring und Kugel)
Aminzahl (AZ):              6,5
Säurezahl (SZ):            4,5
Viskosität bei 160 °C:     0,47 Pa.s
Farbzahl nach Gardner (FZ) 2 - 3
(30 %ige Lösung in Äthanol/
Benzin 1 : 1)

Beispiel 2

Die Durchführung erfolgte analog Beispiel 1 mit der Abwandlung, daß das Verhältnis von Propionsäure : Essigsäure : iso-Nonansäure 0,225 : 0,05 : 0,0025 betrug. Das Polyamid wies folgende Werte auf :

Ep:            102 °C
AZ:            5,5
SZ:            2,9
Visk.160°C:    0,51 Pa.s
FZ:            2 - 3

Beispiel 3

Die Durchführung erfolgte analog Beispiel 1 mit der Abwandlung, daß die dimere Fettsäure die folgenden Werte aufwies: monomere Fettsäure 3,6 Gew.-%, dimere Fettsäure 94,2 Gew.-%. trimere und höherpolymerisierte Fettsäure 2,2 Gew.-%, Jodzahl 15. Das Polyamid wies folgende Werte auf:

Fp:            ·  104 °C
AZ:               3,2
SZ:               1,6
Visk.160°C:       0,33 Pa.s
FZ:               3

**Überprüfung der Polyamidharze**

Das erfindungsgemäße Polyamidharz gemäß Beispiel 1 wurde in einer Labormühle gemahlen und mit einem Siebsatz eine Kornfraktion von 150 - 80 Mikrometer ausgesiebt. Auf der gestrichenen - (glatten) Seite eines weißen leichten Kartons - (Visitenkarte) wurde eine blau pigmentierte hochviskose Offsetfarbe mit Hilfe eines "handcoaters" in einer Stärke von 12 Mikrometer aufgetragen und nach einer Ablüftzeit von 8 -10 sec das ausgesiebte Pulver aufgestreut. Durch den klebrigen Charakter der Farbe blieb eine für die Reliefbildung ausreichende Menge Pulver haften, während das überschüssige Material ohne Schwierigkeiten wieder entfernt werden konnte. Der so vorbereitete Karton wurde dann auf eine langsam rotierende Metallplatte gelegt und von oben aus einer Entfernung von ca. 30 cm mit IR-Strahlern bestrahlt. Nach ca. 5 sec Verweilzeit schmolz das Pulver und verlief zu einem glatten, geschlossenen, glänzenden Film, der nach dem Entfernen aus der Heizzone sofort erstarrte. Da das Polyamidharz praktisch keine Eigenfärbung besitzt, konnte auch keine Veränderung des Blautons der Druckfarbe beobachtet werden. Der Polyamidfilm wies außerdem scharfe Grenzen auf, die genau dem Druckbild entsprachen.

Beim Dornbiegetest (Durchmesser des Dorns 5 mm) konnten keine Abplatzungen festgestellt werden.

Bei der zur Beurteilung der Oberfläche durchgeführten Kontrolle mittels einer Lupe konnen keine der typischen Mängel, wie Verlaufsstörungen, Inhomogenitäten, Kraterbildungen, festgestellt werden.

**Ansprüche**

1. Verwendung von thermoplastischen Polyamiden, bestehend aus

A) hydrierter dimerisierter Fettsäure und gegebenenfalls

B) Propionsäure und

C) Essigsäure und

D) 2-Ethylhexansäure und/oder iso-Nonansäure und

E) 1,2-Diaminoäthan und

F) 1,6-Diaminohexan,

worin das Verhältnis von A) : B) + C) + D) im Bereich von 0,8 :0,2 bis 0,6 : 0,4 liegen kann und der Anteil der Komponente B) gleich oder größer als 0,1 Komponente C) gleich oder größer als 0,05 und D) gleich oder größer als 0,025 und

das Verhältnis der Komponenten E) : F) im Bereich von 0,4 : 0,6 bis 0,6 : 0,4 liegt und

das Verhältnis der Komponenten A) bis D) zu den Komponenten E) und F) annähernd äquivalent für die Herstellung von Reliefdrucken.

2. Verwendung von Polyamidharzen gemäß Anspruch 1, dadurch gekennzeichnet, daß in den Polyamidharzen das Verhältnis der Komponenten A) : B) + C) + D) 0,7 : 0,3 beträgt.

3. Verwendung von Polyamidharzen gemäß den Ansprüchen 1 und 2, dadurch gekennzeichnet, daß der Anteil der Komponente B) 0,2 und die Anteile der Komponenten C) und D) jeweils 0,05 Äquivalente betragen.

4. Verwendung von Polyamidharzen gemäß den Ansprüchen 1 bis 3, dadurch gekennzeichnet, daß die Komponenten E) und F) im Äquivalenzverhältnis von 0,5 : 0,5 vorliegen.

5. Verwendung von Polyamidharzen gemäß den Ansprüchen 1 bis 4, dadurch gekennzeichnet, daß die mitverwendete Fettsäure Dimergehalte von 70 - 96 Gew.-% und Jodzahlen gleich oder kleiner als 25 aufweist.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 243 794 (SCHERING) * Patentansprüche; Seite 7, Zeile 21 - Seite 10, Zeile 9 * | 1-5 | C 08 G 69/34 B 41 M 7/02 |
| Y | FR-A-1 578 455 (UNILEVER-EMERY) * Zusammenfassung * | 1-5 | |
| Y | FR-A-2 320 189 (SCHERING) * Patentansprüche 1,2,4,6-9; Seite 3, Zeile 34 - Seite 4, Zeile 14; Seite 6, Zeile 6 - Seite 7, Zeile 34 * | 1-5 | |
| D,Y | US-A-3 256 304 (E.M. FISCHER) * Patentansprüche * | 1 | |
| A | DE-A-2 245 480 (AYERS) | 1 | RECHERCHIERTE SACHGEBIETE (Int. Cl.4) C 08 G B 41 M |

Der vorliegende Recherchenbericht wurde für alle Patentansprüche erstellt.

| Recherchenort DEN HAAG | Abschlußdatum der Recherche 30-06-1986 | Prüfer LEROY ALAIN |
|---|---|---|

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82